# EUROPÄISCHE PATENTANMELDUNG

(11) **EP 3 391 745 A1**
(43) Veröffentlichungstag der Anmeldung: **24.10.2018**
(21) Anmeldenummer: 18167388.0
(22) Anmeldetag: 13.04.2018
(51) Int. Cl.: A01M 21/04, A01K 3/00

(54) **VORRICHTUNG UND VERFAHREN ZUR VERNICHTUNG UNERWÜNSCHTEN PFLANZENWUCHSES UND VERWENDUNG DER VORRICHTUNG**

(30) Priorität: 15.04.2017 DE 202017002010 U; 02.10.2017 DE 202017106010 U; 23.11.2017 DE 202017006048 U
(71) Anmelder: VOSS GmbH & Co. KG, 25885 Wester-Ohrstedt (DE)
(72) Erfinder: KAMENTZ, Ove, 25862 Joldelund (DE); SEEMANN, Berthold W., 21271 Hanstedt (DE)
(74) Vertreter: Müller Schupfner & Partner Patent- und Rechtsanwaltspartnerschaft mbB

(57) **Zusammenfassung**

Gegenstand der Erfindung ist eine Vorrichtung und ein Verfahren zur Vernichtung unerwünschten Pflanzenwuchses unter Verwendung von Gleichspannung und die Verwendung der Vorrichtung zur Vernichtung unerwünschten Pflanzenwuchses, insbesondere für Weidezäune.

## Beschreibung

Die Erfindung betrifft eine Vorrichtung und ein Verfahren zur Vernichtung unerwünschten Pflanzenwuchses und die Verwendung der Vorrichtung zur Vernichtung unerwünschten Pflanzenwuchses, insbesondere für Weidezäune.

### Stand der Technik und Aufgabe

Unerwünschter Pflanzenwuchs, umfassend Gras und andere Unkräuter in Gärten, Grünanlagen, auf gepflasterten Wegen und Plätzen, Bürgersteigen, Verkehrsinseln, auf Gleisanlagen und auf Mittel- und Randstreifen von Autobahnen, muss derzeit sehr aufwendig manuell entfernt werden.

Bei einem elektrischen Zaun sind ein oder mehrere elektrische Leiter isolierend an Zaunpfählen angebracht. Die elektrischen Leiter sind in der Regel als blanke Drähte aus verzinktem Stahl oder Aluminium oder in Form von mehreren dünnen, in Kunststoffgewebeband, Kunststoffseil oder dünneren Kunststofflitzen eingebetteten bzw. eingewebten leitfähigen Drähten ausgeführt.

Ein Weidezaungerät versorgt den elektrischen Zaun mit Hochspannungsimpulsen. Dabei sind die elektrischen Leiter des elektrischen Zaunes mit dem einen Anschluss des Weidezaungerätes verbunden, während der andere Anschluss mit einer oder mehreren in das Erdreich eingetriebenen Elektroden verbunden ist.

Insbesondere hochwachsende Pflanzen stören die Funktionsfähigkeit elektrischer Zäune, die für die Weidehaltung von Nutztieren auf begrenzten Flächen üblicherweise als Umzäunung angebracht werden. Um Spannungsverluste zu vermeiden, sollen Grashalme und andere leitfähige Gegenstände die Bänder und Drähte nicht oder nur in geringem Umfang berühren.

Die Hütespannung, wie sie Weidezaungeräte in Elektrozäune bzw. elektrische Weidezäune einbringen, sollte mindestens 2 kV an jeder Stelle des Zauns betragen, aber ca. 12 kV nicht überschreiten. Zwischen den einzelnen Impulsen muss laut DIN EN 60335-2-76 Anhang E und VDE0131 mindestens eine Sekunde Pause liegen.

Die Pulsdauer muss unter 10 ms liegen. Die Energie pro Puls im 500-Ohm-Anteil der Standardlast darf 5 Joule nicht überschreiten. In der europäischen Norm EN 61011 sind die elektrischen Grenzwerte für den Betrieb von Elektrozäunen festgelegt.

Mit elektrischen Weidezäunen ist man in der Lage, Tiere sowohl innerhalb als auch außerhalb der Weidefläche von der Berührung mit der Umzäunung fernzuhalten. Je nach Tierart werden solche Elektrozäune mit elektrisch leitenden Bändern oder mit von Drähten umgebenen Kordeln ausgeführt, die ggf. in unterschiedlichem Abstand voneinander angebracht sind.

Alle herkömmlichen elektrischen Weidezaunanlagen werden in ihrer Wirksamkeit dadurch beeinträchtigt, dass aufwachsende Pflanzen und Gräser einen oder mehrere Leiter berühren, womit nicht nur zusätzliche Energie verloren geht, sondern auch bedingt durch den Feinschluss gegen das Erdpotenzial die erforderliche Spannung, die zur Abschreckung dienen soll, nicht mehr in ausreichendem Maße vorhanden ist. Um auch Tiere fernzuhalten, die versuchen, unter dem untersten Draht hindurchzukommen, muss der letzte Leiter möglichst tief angeordnet sein. Dem steht aber entgegen, dass gerade in dieser geringen Höhe ein verstärkter unerwünschter Pflanzenwuchs anzutreffen ist. Damit ist die Funktionstüchtigkeit nicht mehr in vollem Umfang gewährleistet.

Die bestehenden Elektrozäune sind in der Praxis unterschiedlichen Betriebsbedingungen ausgesetzt. Ein neu errichteter Weidezaun der mit impulsartigen Spannungen von 2 kV bis 12 kV für Zeiten im ms - Bereich versorgt wird, und unter dem vor der Montage vorsorglich jegliche Pflanzen abgemäht wurden, besitzt gegen die Erde einen Ableitwiderstand in der Größe von einigen 100 kOhm. Dagegen zeigt ein Elektrozaun mit starkem Pflanzenbewuchs nur noch einen Ableitwiderstand in der Größenordnung von 100 Ohm bis 1 kOhm. Die Berührung des Elektrozaunes mit einem Tierkörper, dessen Ableitwiderstand mit 500 Ohm angenommen wird, führt dann jedoch zu einer Berührungsspannung, die von dem Tier nicht mehr als ausreichender Schmerz empfunden wird.

In Kenntnis dieser Unzulänglichkeit und unabhängig hiervon auch in dem allgemeinen Bestreben, unerwünschte Pflanzen zu vernichten, wurden verschiedene Möglichkeiten in Erwägung gezogen.

Die manuelle oder durch Hilfsgeräte unterstützte Entfernung der störenden Pflanzen ist aufwändig. Ein Einsatz von Pestiziden ist häufig unerwünscht, praktisch nicht möglich, weil auch Nutzpflanzen oder erwünschte Pflanzen angegriffen werden, oder sogar gesetzlich untersagt.

Eine Veränderung des Elektrozaunes dergestalt, dass der untere Leiter weggelassen oder höher gesetzt wird, verfehlt häufig das beabsichtigte Ziel einer Barriere, da Tiere dann die Umzäunung ggf. unterkriechen könnten. Als mögliche Konsequenz müsste dann ein zusätzlicher mechanischer Unterkriechschutz installiert werden.

Eine Abdeckung des Erdreiches unter dem Elektrozaun könnte den Pflanzenwuchs örtlich begrenzen. Allerdings wäre die akkurate Abdeckung, besonders um die Stützpfähle herum, äußerst aufwändig, da Gräser selbst feine Zwischenräume durchwachsen können.

Es sind Verfahren und Vorrichtungen bekannt, um Unkrautbewuchs mittels Elektrizität zu vernichten. Dabei werden Hochspannungen eingesetzt, die über dem für die Tierabschreckung erforderlichen Wert liegen und bei den zudem auch die Impulsenergie das übliche Maß übersteigt. Der Mangel besteht in der Gefährdung durch lebensgefährliche Spannungen und Energien. Ein Einsatz dieser Verfahren und Vorrichtungen zum Beispiel in öffentlichen Bereichen ist aus Sicherheitsgründen nicht möglich.

In der DE 4327572 C1 wird ein Elektrozaungerät vorgestellt, bei dem der Zaunzustand mittelbar aus der Messung des elektrischen Stromes oder der Spannung nach einem Entladeimpuls durch einen Sensor ermittelt wird. In einem nachgeschalteten Steuerteil werden Art und Größe der Zaunbelastung ermittelt. Nach dieser Schrift wird je nach ermittelter Zaunbelastung die Spannung und die Impulsenergie derart gesteuert, dass unter Beachtung der zugelassenen Grenzwerte eine möglichst hohe Spannung und eine hohe Impulsenergie in den Zaun eingespeist werden.

In der DE 4411333 A1 und ebenso in dem Gebrauchsmuster G 9407666.9 wird ein Verfahren zum Beeinflussen von Zellen ein- und mehrzelliger lebender Organismen vorgeschlagen, bei dem die Organismen in den Wirkungsbereich des um zwei beabstandet, gegenpolig gleichstrombeaufschlagte Elektroden sich ausbildenden ruhenden Gleichspannungsfeldes gebracht und in dieser Lage während der Zeitdauer des Beeinflussungsverfahrens gehalten werden, durch welches die im Plasma der Mitochondrien enthaltenen freien Elektronen bzw. Ionen entgegengesetzt zur Feldlinienrichtung ausgerichtet und durch Richtungsablenken zum Sammeln im Bereich der positiv polarisierenden leitfähigen äußeren Schicht der Mitochondrien beeinflusst werden. Die Metallelektroden können zur Vermeidung von Überschlägen mit einer Isolierschicht ummantelt sein. Aus den weiteren Darlegungen geht hervor, dass für dieses Verfahren Elektroden bestimmter Form verwendet werden und in definiertem gegenseitigem Abstand gehalten werden müssen. Für den Beeinflussungszeitraum darf das Gleichspannungsfeld nicht verändert werden.

Nach dem obigen Stand der Technik wird ein sich ausbildendes und ruhendes Gleichspannungsfeld erzeugt, das durch zwei in einem bestimmten Abstand gehaltene Elektroden erzeugt wird. Daher können isolierte Elektroden verwendet werden. Für die beabsichtigte Beeinflussung der Mitochondrien ist ein durch die Elektrodenform definiertes Gleichspannungsfeld erforderlich, das über den Beeinflussungszeitraum unverändert und stabil sein muss. Ein Stromfluss eines Gleichstromes wird nicht offenbart. Die vitale Auswirkung eines elektrischen Stromes auf pflanzliche Zellen kann sehr unterschiedlich sein. Dabei zeigen verschiedene Pflanzen gänzlich unterschiedliche Reizantworten. Bekanntlich ist in zahlreichen pflanzlichen Zellen das Protoplasma in rotierender oder zirkulierender Bewegung, um den Zellmetabolismus aufrecht zu erhalten. Diese Bewegung kann durch elektrische Reize verändert werden.

### Zusammenfassung der Erfindung

Die erfindungsgemäße Vorrichtung hat sich zur Aufgabe gemacht, die elektrische Vernichtung von unerwünschtem Pflanzenwuchs so auszugestalten, dass keine Umweltbelastung entstehen kann, die Funktionsfähigkeit damit verbundener Geräte oder Anlagen in vollem Umfang weiterhin gewährleistet ist und ein energieeffizienter Betrieb möglich ist.

Die Erfindung betrifft eine Vorrichtung und ein Verfahren zur Vernichtung unerwünschten Pflanzenwuchses und eine Verwendung gemäß den nachfolgenden unabhängigen Ansprüchen. Bevorzugte Ausführungsformen sind Gegenstand der Unteransprüche oder nachfolgend beschrieben. Die für die Vorrichtung offenbarten Merkmale gelten in gleicher Weise für das Verfahren.

Die Vorrichtung zur Vernichtung unerwünschten Pflanzenwuchses umfasst eine Stromquelle und mindestens zwei Leiter, mit denen eine elektrische Gleichspannung an eine oder mehrere Pflanzen als Teil des unerwünschten Pflanzenwuchses angelegt wird, so dass ein Gleichstrom in den Leitern fließt, wobei die Stromquelle mindestens 3V Gleichspannung in die Leiter einbringt und der Strom durch zumindest einen Teil der Pflanze fließt, entweder unmittelbar (weil beide Leiter an der Pflanze anliegen) oder indem ein Leiter mit dem Erdboden verbunden ist und der andere mit der Pflanze.

Die Stromquelle ist z.B. ausgewählt aus einem oder mehreren Mitgliedern der Gruppe umfassend einen Gleichstromgenerator, angeschlossen an das öffentliche Versorgungsnetz, eine Batterie, eine Brennstoffzelle, ein Solarpanel und ein wind- oder wasserkraftangetriebener Generator.

Die hier beschriebene Erfindung benützt einen Gleichstrom hinreichender Stärke zur Vernichtung von Pflanzenwuchs. Die Gleichspannung beträgt in aufsteigender Bevorzugung zumindest 3 V, zumindest 9 V, zumindest 24 V, zumindest 36 V, zumindest 42 V oder sogar zumindest 60 V, wobei die Gleichspannung nach oben vorzugsweise bei maximal 100 V oder maximal 80 V beschränkt ist. Besonders bevorzugt ist eine Gleichspannung zwischen 42 V und 100 V, insbesondere 60 V und 80 V. Bei Gleichspannungen unter 24 V stellt sich in der Regel der Behandlungserfolg zu langsam ein.

Typische Behandlungszeiten liegen zwischen 30 min und 8 Tagen, insbesondere zwischen 2 h und 4 Tagen oder 1 h und 2 Tagen.

Zumindest einer der Leiter ist ein metallischer linienförmiger Leiter, z.B. ein Draht, oder ein flächiger Leiter, z.B. ein Gitter, Draht- oder Kettengeflecht oder ein Plattengeflecht aus gelenkig miteinander verbundenen Platten. Der Leiter befindet sich in einem Abstand von zumindest 1 cm, insbesondere zumindest 5 cm, zumindest 10 cm, über den Pflanzen oder ist unmittelbar auf die Pflanzen aufgelegt. Dieser Leiter ist so angebracht, dass er mit dem Erdboden keine elektrisch leitende Verbindung hat oder die leitende Verbindung minimiert ist.

Es ist auch möglich, den weiteren oder die weiteren Leiter nicht mit der Erde zu verbinden, sondern einen Verbund von zwei oder mehr flächigen Leitern zu bilden, wobei plus und minus-Leiter voneinander beanstandet sind, entweder nur räumlich oder auch durch eine isolierende Verbindung, so dass der unerwünschte Pflanzenwuchs durch die zumindest zwei Schichten von flächigen Leitern hindurch reicht und so die leitende Verbindung über die Pflanze geschaffen wird.

Unerwünschter Pflanzenwuchs besteht z.B. aus Gras und anderen Unkräutern. Die erfindungsgemäße Vorrichtung nutzt die durch einen elektrischen Gleichstrom hervorgerufene Wirkung auf Pflanzenzellen derart aus, dass dadurch das Absterben der betreffenden Pflanze erfolgt.

Anwendbar ist die Vorrichtung und das Verfahren neben der ungestörten Funktion von Elektrozäunen überall dort, wo ein unerwünschter Pflanzenwuchs umweltfreundlich und energieeffizient verhindert oder beseitigt werden soll.

Nach einem Erklärungsmodell bewirkt unabhängig von der Pflanzenart die einsetzende Elektrolyse eine Dissoziation in gewissen Zellstrukturen, so dass die zytoplasmatische Strömung zum Stillstand kommt und die Pflanze abstirbt. Damit steigt der elektrische Widerstand an und der durch den Pflanzenkontakt mit dem elektrischen Leiter des Zaunes verursachte Erdschluss wird soweit reduziert, dass die ursprüngliche Funktion wieder gewährleistet ist.

Das Wesentliche der hier vorgestellten Neuerung beinhaltet nicht die Beeinflussung und die Richtungsablenkung von Mitochondrien oder anderen Zellbestandteilen durch ein Gleichspannungsfeld, sondern allgemein die Herbeiführung eines irreversiblen Schadens durch einen Gleichstrom.

Daher wären die in obigem Verfahren (DE 4411333 A1) nach dem Stand der Technik beschriebenen Elektroden mit einer Isolierschicht nicht geeignet, denn sie würden den Stromfluss unterbinden. Auch ist es dort eine Voraussetzung, dass die Lage des Gleichspannungsfeldes für die Zeitdauer der Beeinflussung unverändert bleiben muss. Derartige Bedingungen würden die Praxistauglichkeit der erfindungsgemäßen Vorrichtung in Frage stellen.

### Detaillierte Beschreibung der Erfindung

Nach einer ersten bevorzugten Ausführungsform der Erfindung wird an einen Leiter eine Gleichspannungsquelle mit permanenter Gleichspannung von 24 bis 100 V, insbesondere 42 bis 100 V und besonders bevorzugt 60 bis 80 V angelegt. Der Minuspol ist vorzugsweise mit einem Erdkontakt verbunden, der sich elektrisch leitend im Erdreich im Abstand von zumindest 0,5 m, insbesondere zumindest 1 m, zum Leiter befindet, der mit dem Pluspol der Gleichspannungsquelle verbunden ist. Der Leiter ist ein metallischer linienförmiger Leiter, z.B. ein Draht, oder ein flächiger Leiter, z.B. ein Gitter, Draht- oder Kettengeflecht. Der Leiter befindet sich nach einer Ausführungsform in einem Abstand von zumindest 1 cm, insbesondere zumindest 5 cm, zumindest 10 cm, über dem mit Gräsern bewachsenen Erdboden. Er ist so angebracht, dass er mit dem Erdboden keine elektrisch leitende Verbindung hat, solange er nicht mit Pflanzen in Berührung kommt. Nach einer anderen Ausgestaltung ist er einfach auf die Pflanzen aufgelegt.

Die Stromquelle kann einen permanenten Stromfluss von Gleichstrom zur Verfügung stellen, der Gleichstrom kann gepulst sein oder die Polarität des Gleichstroms wechselt in Abhängigkeit von der Zeit.

Nach einer zweiten Ausführungsform der Erfindung erzeugt ein Hochspannungsgenerator definierte Hochspannungsimpulse von 1 bis 12 kV von begrenzter Zeitdauer (z.B. 10 mS bis 1 Sek.) und zeitlich beabstandet voneinander (z.B. 0,5 bis 30 sek.), die bei Berührung mit einem Tier bei diesem einen kurzen schlagartigen Schmerz auslösen. Gleichzeitig ist eine Gleichspannungsquelle vorgesehen. Vom Hochspannungsgenerator gelangen die Hochspannungsimpulse über eine Anschlussleitung an die elektrischen Leiter eines Weidezaunes. Der unterste Leiter des Weidezaunes ist aber über eine Anschlussleitung mit der Gleichspannungsquelle verbunden und der andere Pol mit einem Erdspieß.

Insbesondere ist es möglich, dass die Stromquelle einen Gleichstromspannungsquelle umfasst und zusätzlich ein Hochspannungsgenerator zur Erzeugung von Hochspannungsspitzen, wobei
a) Gleichstromgenerator und Hochspannungsgenerator entweder zeitlich versetzt Strom auf den Leiter aufbringen oder
b) die Hochspannungsspitzen zeitlich gepulst dem Gleichstrom überlagert werden.

Der Hochspannungsgenerator kann hierbei Hochspannungsspitzen von größer 1000 V, insbesondere größer 5000 V, bereitstellen, insbesondere zeitlich beabstandet um mindestens 0,5 oder mindestens 1 s und auch unabhängig hiervon insbesondere mit einer Energie von 5 bis 12 J.

Vor Montage des Weidezaunes werden z.B. alle Gräser und Pflanzen unter der beabsichtigen Aufstelllinie des Weidezaunes abgemäht. Nach erfolgter Montage des Weidezaunes und der Inbetriebnahme von Hochspannungsgenerator und Gleichspannungsquelle ist die Anlage funktionsfähig. Wenn dann Pflanzen aufwachsen und einen oder mehrere Leiter des Weidezaunes berühren, beginnt der Stromfluss von der Gleichspannungsquelle in die Pflanze. Die normale Schutzfunktion des Hochspannungsgenerators zur Abwehr von Tieren ist trotzdem gewährleistet. Der durch die Pflanzen fließende Gleichstrom wirkt erfindungsgemäß zerstörend auf die Pflanzen.

Diese Anwendung ermöglicht den gezielten Einsatz auf Flächen, wo Wildkrautvernichtung zugunsten von angrenzenden Nutzpflanzen gewünscht ist, ohne dass das Wachstum der angrenzenden Nutzpflanzen beeinträchtigt wird, wie zum Beispiel auf Obst-, Kaffee-, Weinanbau- und anderen Gehölzplantagen sowie Erdbeer-, Spargel-, Kohl- und anderen monokulturellen Gemüsefeldern, aber auch in der sonstigen Landwirtschaft, im Zierpflanzenanbau, in Gewächshäusern und im Hobby-Garten oder auf Mittelstreifen von Autobahnen.

Einer der Leiter (z.B. der Plus-Pol) oder beide Leiter können nach einer Ausführungsform der Erfindung mit einem elektrisch leitenden Kunststoff beschichtet sein. Hier bieten sich Kunststoffe oder Lacke an, welche Kohlefasern oder Kohlefaserpartikel beinhalten. Dies vermindert die elektrochemische Korrosion. Nach einer anderen Ausgestaltung sind Kohlfasern mit zumindest einem metallischen Elektrodraht zu einem Seil verarbeitet, insbesondere so, dass die metallischen Elektrodrähte innen verlaufen und z.B. die Seele des Seiles bilden. Der flexible Leiter kann auch metallisch sein, z.B. ein oder mehrere flexible Metallseelen aufweisen, und mit einem Graphitpulver und einem Bindemittel beschichte sein, wie dies in der DE 202017006048 U1 beschrieben ist. Der Innenleiter kann hierbei auch mehrere Kunststofffilamente, die mit Metalldrähten verseilt sind, umfassen und das so geformte Seil kann dann von einer Schicht aus Graphit und Bindemittel umhüllt sein. Der metallische Leiter oder das Seil kann auch mit Kohlenstoff bedampft sein, z.B. durch CVA (chemical vapor deposition).

Durch das Aufschalten einer Gleichspannung auf einen Weidezaundraht wird es möglich, zusätzliche Geräte direkt über die Versorgungsspannung des Zaunes zu betreiben. Somit können zum Beispiel Zaun-Messgeräte, Zaun-Lampen (Led-Lichter), aber auch zaunfremde Geräte mit der Versorgungspannung des Zaunes betrieben werden.

Nach einer Ausgestaltung der Erfindung ist zumindest ein Leiter eine Kathode und zumindest ein Leiter eine Anode, wobei die Anode im elektrischen Kontakt mit der Pflanze steht und die Kathode im elektrischen Kontakt mit dem Erdreich und vorzugsweise mehrere Leiter die Kathode bilden und an verschiedenen Stellen mit dem Erdreich in Verbindung stehen.

Nach einer weiteren Ausgestaltung der Erfindung ist zumindest ein Leiter eine Kathode und zumindest ein Leiter eine Anode, wobei die Kathode im elektrischen Kontakt mit der Pflanze steht und die Anode im elektrischen Kontakt mit dem Erdreich, eben umgekehrt der o.g. Methode. Dies kann insbesondere bei Weidezaunanwendungen angewandt werden, um Materialabbauprozesse aufgrund von auftretetenden Elektrolyseeffekten vom Weidezaunleitermaterial auf den Leiter mit Erdkontakt (Erdspieß) zu verlagern. Ziel ist hierbei, dass sich das Material des Erdspießes durch den elektrolytischen Prozess abbaut anstelle des Leiters am Weidezaun. Damit dies funktioniert, muss gegebenenfalls die Hochspannung des Weidezaungerätes in der Polarität invertiert auf den Weidezaun gegeben werden, so dass die Polarität der angelegten Gleichspannung und der Hochspannung übereinstimmen und der spannungsführende Leiter des Weidezaungerätes an den Erdspieß angeschlossen wird und der Nullleiter an den Zaun angeschlossen wird. Die Invertierung ist gegebenenfalls nicht nötig, wenn das Weidezaungerät und die Gleichspannungsquelle so ausgeführt sind, dass beide Spannungskreisläufe getrennt sind (ggf. auch nur zeitlich), dann kann die Hochspannung in "normaler" Polarität genutzt werden. Die Ausgestaltung ist in der Regel nur sinnvoll, wenn das Material bzw. das Metall des Erdspießes, das hier als Opferanode fungiert, in der Spannungsreihe niederwertiger ist als das Material des Leiters, z.B. des Weidezauns. Beispielsweise wird ein Erdspieß, enthaltend Aluminium und ein Leiter aus Edelstahl eingesetzt. Gleichwertige Materialien in der Spannungsreihe führen nicht zum Ziel. Auf Grund der hohen Masse des Erdspießes dauert der Abbauprozess erheblich länger und gewährleistet so über einen ausreichend langen Zeitraum einen störungsfreien Betrieb. Durch diesen Aufbau kann dem Abbau des Leitermaterials durch auftretende Elektrolyse entgegengewirkt werden. Die Lösung ermöglicht die Verlagerung des Abbauprozesses durch Elektrolyse an einen weniger relevanten Ort, z.B. den Ort der Opferelektrode.

Nach einer weiteren Ausgestaltung der Erfindung ist zumindest ein Leiter eine Kathode und zumindest ein Leiter eine Anode, wobei Anode und Kathode mit verschiedenen Stellen jeweils einer Pflanze in Kontakt stehen.

Der Leiter kann ein metallischer Leiter, ein leitender Kohlenstoff oder ein elektrisch-leitender Kunststoff sein. Insbesondere kann der Leiter ausgewählt sein aus einem oder mehreren Mitgliedern der Gruppe:
- Litzen oder Bänder,
- Netzen, Vliese, Folien, oder Matten,
- Drähten, Ketten, oder Seilen,
- flächige Drahtgeflechte, flächige Kettengeflechte,
- Gitter oder Platten,
- Erdspieße oder Stäbe,
- Walzen oder Kämme.

Anode und Kathode können hierbei jeweils als Flächengebilde ausgebildet sein, wobei das Flächengebilde zumindest zwei Lagen aufweist, die miteinander über eine Isolierung verbunden sind, und die Flächengebilde und die Isolierung Durchbrechungen zum Durchwachsen von Pflanzen aufweist. Der Leiter ist dann ein flächiges Netzwerk, wobei eine durchbrochene Folie oder Matte die Isolierung bildet.

Das Verfahren und die Vorrichtung sollen an einigen Ausführungsbeispielen erläutert werden, ohne auf diese Ausführungsbeispiele beschränkt zu sein.

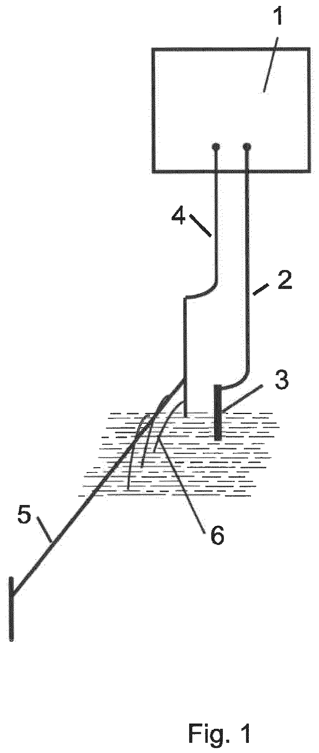

### Ausführungsbeispiel 1 (siehe hierzu Fig. 1):

Eine Gleichspannungsquelle (1), die über das örtliche Niederspannungsnetz mit einer Speisespannung von 230V versorgt wird, erzeugt eine permanente Gleichspannung von etwa 73 V. Der Minuspol wird über die Zuleitung (2) mit einem Erdspieß (3) verbunden, der sich elektrisch leitend im Erdreich im Abstand von 1 m zum Leiter (5) befindet, der über die Zuleitung (4) mit dem Pluspol der Gleichspannungsquelle verbunden ist. Der Leiter hat eine Länge von 1,0 m besteht aus einem Kunststoffseil, in das 6 Stahldrähte von 0,2 mm eingearbeitet sind.

Der Leiter befindet sich in einem Abstand von etwa 7 cm über dem mit Gräsern bewachsenen Erdboden. Er ist so angebracht, dass er mit dem Erdboden keine elektrisch leitende Verbindung hat, solange er nicht mit Pflanzen (6) in Berührung kommt. Erfindungsgemäß wird zwischen dem elektrischen Leiter (5) und dem Erdreich über den Erdspieß (3) eine Potenzialdifferenz aufgebaut. Sobald die Pflanzen den elektrischen Leiter (5) berühren, kommt ein Stromfluss zustande. Dieser bewirkt zerstörende Prozesse in den Pflanzenzellen, die nach gewisser Zeit zum Absterben der Pflanzen führen.

Nach Einschalten der Gleichspannung wird ein Spannungswert von 72,8 V bei einer Stromstärke von 1,056 mA gemessen. Daraus resultiert ein Anfangswert des Ableitwiderstandes von 68,9 kOhm, hervorgerufen durch den Kontakt mit den noch vitalen Pflanzen. Nach 42 Stunden hatte sich bei konstanter Spannung die Stromstärke auf einen Wert von 0,548 mA reduziert, entsprechend einem Ableitwiderstand von 132,8 kOhm. Die Grashalme hatten eine graue Farbe angenommen. Offensichtlich war der Zellstoffwechsel bereits stark gestört. Nach 162 Stunden seit Inbetriebnahme konnte nur noch ein Strom von 0,031 mA gemessen werden. Das entspricht einem Ableitwiderstand von 2290 kOhm. Der Ableitwiderstand hat sich daher in diesem Zeitraum auf den 33-fachen Wert erhöht. Bei allen Pflanzen war der Tonus soweit zurückgegangen, dass sie seitlich abgekippt sind. Die Färbung war grau bis braun. Auch nach einigen Wochen hatte sich dieser Zustand nicht mehr geändert.

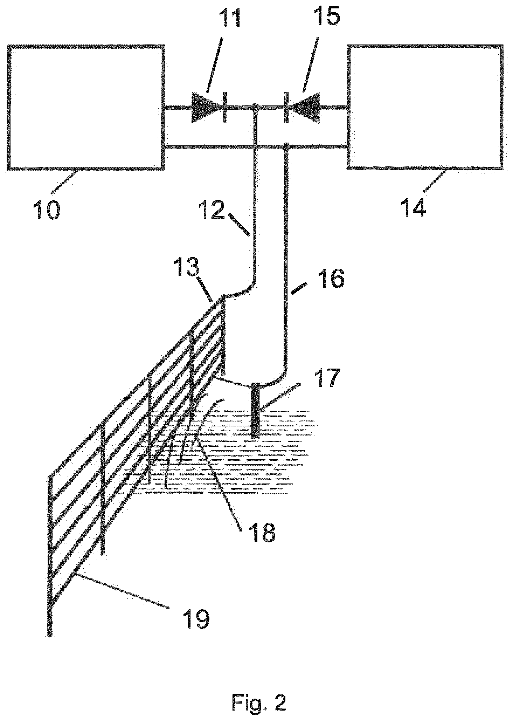

### Ausführungsbeispiel 2 (siehe hierzu Fig. 2):

Ein in Weidezaungeräten eingesetzter und damit hinlänglich bekannter Hochspannungsgenerator (10) erzeugt definierte Hochspannungsimpulse, die bei Berührung mit einem Tier bei diesem einen kurzen schlagartigen Schmerz auslösen. In der verbindlichen Richtlinie EN 60335-2-76 A12 werden Maximalwerte für die Hochspannung, die Impulsenergie und ein Mindestwert für die Impulspausen festgelegt. In der im Folgenden näher beschriebenen Anordnung wird das Zusammenwirken von Hochspannungsgenerator und Gleichspannungsquelle näher beschrieben. Vom Hochspannungsgenerator (10) gelangen die Hochspannungsimpulse in einer Höhe von 10,2 kV über eine Hochspannungsdiode HVM12 (11) und die Anschlussleitung (12) an die elektrischen Leiter des Weidezaunes.

Dieser wird gebildet aus einem Netz von mehreren waagrecht verlaufenden Kunststoffseilen, in die jeweils 6 Stahldrähte von 0,2 mm Durchmesser eingearbeitet sind und die elektrischen Leiter (13) darstellen. Zur Einhaltung des gegenseitigen Abstandes sind senkrechte, elektrisch nicht-leitende Kunststoffseile mit den waagrecht verlaufenden verknüpft. Alle waagrechten Leiter, außer dem untersten, dem Erdboden zugewandten Leiter, sind elektrisch leitend miteinander verbunden. Die positiven Hochspannungsimpulse werden allen diesen Leitern zugeführt. Der unterste Leiter (19) ist über die Anschlussleitung (16) mit dem Erdspieß (17) und dem negativen Anschluss des Hochspannungsgenerators (10) verbunden. Der unterste Leiter (19) ist leitend mit dem Erdpotential verbunden, weil der Leiter nicht gegen den Zaunpfahl isoliert ist.

Die Gleichspannungsquelle (14) leitet den Gleichstrom ebenfalls über eine Hochspannungsdiode (15) auf die gemeinsame Anschlussleitung (12) an die waagrechten Leiter (13) des Weidezaunes. Diese Zusammenschaltung von Hochspannung und niedriger Gleichspannung wird möglich durch den Einsatz der Hochspannungsdioden, in ihrer Funktion als Sperrdioden. Sobald vom Hochspannungsgenerator (10) ein positiver Impuls abgegeben wird, gelangt er über die Hochspannungsdiode (11) an den Weidezaun. Die in Sperrrichtung befindliche Hochspannungsdiode (15) verhindert das Eindringen der Hochspannung in den Gleichspannungsgenerator, der andernfalls zerstört würde. Die Gleichspannungsquelle (14) leitet über die Hochspannungsdiode (15) und die gemeinsame Anschlussleitung (12) permanent einen Gleichstrom an die Leiter (13) des Weidezaunes. Um einen Stromfluss von der Gleichspannungsquelle (14) in den Hochspannungsgenerator (10) zu verhindern, wirkt die Hochspannungsdiode (11) als Sperrdiode. Somit wird die Funktion des Hochspannungsgenerators (10) nicht durch die Gleichspannungsquelle (14) beeinträchtigt.

Vor Montage des Weidezaunes werden alle Gräser und Pflanzen unter der beabsichtigen Aufstelllinie des Weidezaunes abgemäht. Nach erfolgter Montage des Weidezaunes und der Inbetriebnahme von Hochspannungsgenerator und Gleichspannungsquelle ist die Anlage funktionsfähig. Wenn dann Pflanzen aufwachsen und einen oder mehrere Leiter des Weidezaunes berühren, beginnt der Stromfluss von der Gleichspannungsquelle in die Pflanze. Die normale Schutzfunktion des Hochspannungsgenerators zur Abwehr von Tieren ist trotzdem gewährleistet. Der durch die Pflanzen fließende Gleichstrom wirkt erfindungsgemäß zerstörend auf die Pflanzen.

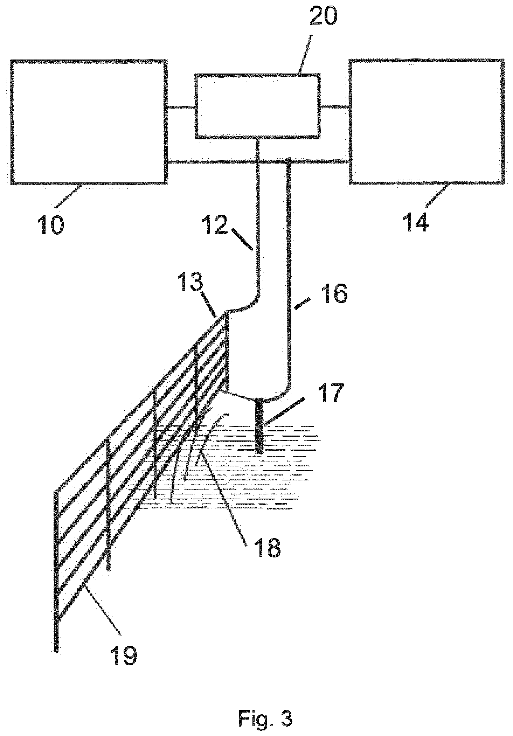

### Ausführungsbeispiel 3 (siehe hierzu Fig. 3):

Die erfindungsgemäße Anwendung unterscheidet sich gegenüber dem Ausführungsbeispiel 2 dadurch, dass die Umschaltung der wechselnden Beaufschlagung des Ausganges (12) mit Gleichspannung und Hochspannungsimpulsen durch ein Hochspannungsrelais (20) ausgeführt wird.

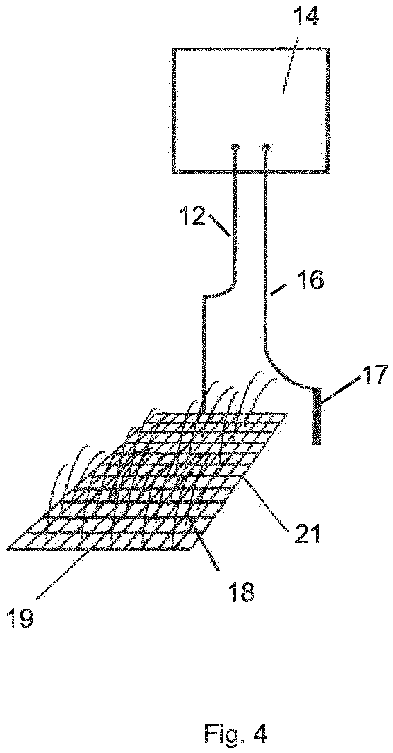

### Ausführungsbeispiel 4 (siehe hierzu Fig. 4):

Eine Gleichspannungsquelle (14) liefert permanent eine für Menschen und Tiere ungefährliche Kleinspannung von 60 V, die über eine Leitung (12) an ein über der störenden Bewuchsfläche aufgelegtes Gitter (19) aus verchromtem Metall geführt wird. Das Gitter hat die Abmessung von 30 cm x 40 cm. Der Minuspol der Gleichspannungsquelle (14) ist über die Leitung (16) mit dem Erdspieß (17) verbunden und im Abstand von 50 cm in das Erdreich eingebracht. Erfindungsgemäß wird zwischen dem Gitter (19) und dem Erdreich über den Erdspieß (17) eine Potenzialdifferenz aufgebaut.

Zu Versuchsbeginn um 10:34 h wurde ein Stromfluss von 13,25 mA gemessen. Dieser relativ hohe Strom resultiert aus dem geringen Ableitwiderstand, da unter dem gesamten Gitter ein dichter Grasbewuchs vorhanden war. Andererseits führte der hohe Strom zu einem schnellen Absterben des Grases. Bereits um 20:17h, also nach etwa 10 Stunden, war der Strom auf 2,93 mA zurückgegangen. Die Zunahme des Ableitwiderstandes ist gegenüber dem Ausführungsbeispiel 3 wesentlich geringer. Die Ursache ist folgende: Durch das Absterben des Grases ist der Innendruck (Tonus) in den Gräsern stark reduziert und das Gitter, welches nur durch die Pflanzen gehalten wird, kommt näher an den Erdboden und stellt einen Feinschluss zum Erdpotential her, wodurch sich der Widerstand verringert. Das Gras hatte eine durchgehend graue Färbung angenommen. Auch nach mehreren Wochen hatten sich die Pflanzen nicht wieder erholt. Ein Beweis dafür, dass ein irreversibler Vorgang ausgelöst worden war.

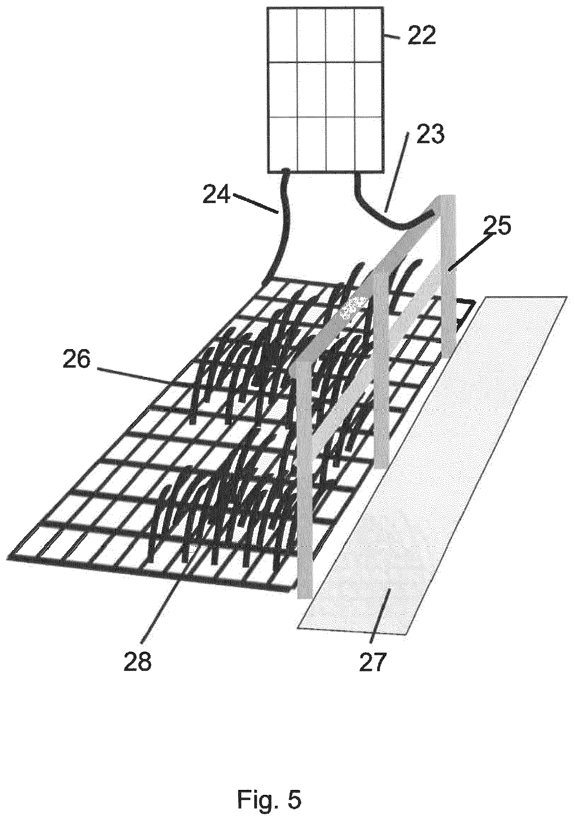

### Ausführungsbeispiel 5 (siehe hierzu Fig. 5):

Der Mittelstreifen bei Autobahnen zeigt zeitabhängig einen Grasbewuchs, der sich auch auf die angrenzende Fahrbahn (27) störend auswirkt.

Über der zu kontrollierenden Grundfläche wird im Abstand von etwa 7 cm ein 60 cm breites und 1000 m langes elektrisch leitendes Drahtgeflecht (26) ausgespannt. Durch kleine Kunststoffstützen, die im Abstand von 50 cm an dem Geflecht befestigt sind, wird der Abstand zum Untergrund eingehalten.

Die Gleichspannungsquelle wird durch ein Solarpaneel (22) gebildet, das mit einer Pufferbatterie eine autarke Stromversorgung sichert. Der Pluspol (24) der Gleichspannungsquelle wird mit dem Drahtgeflecht verbunden, während der negative Pol (23) an die Leitplanken (25) geführt wird, da diese ein sicheres Erdpotential besitzen. Sobald die aufwachsenden Grasspitzen (28) das Drahtgeflecht (26) berühren, wird der Prozess des kontrollierten Wachstums eingeleitet. Die Höhe der Kunststoffstützen bestimmen die Höhe des Bewuchses. Das manuelle Mähen, verbunden mit einer Einrichtung und Aufrechterhaltung einer Absperrung, entfällt.

### Ausführungsbeispiel 6:

Ausführungsbeispiel 6 unterscheidet sich gegenüber dem Ausführungsbeispiel 4 dadurch, dass das Gitter (19) mit einer elektrisch-isolierenden Schicht versehen ist, die das Gitter ganzflächig auf einer Seite bedeckt. Die aufgebaute Potenzialdifferenz wirkt nur auf die Pflanzen, die mit der elektrisch-leitfähigen, nicht-isolierten Fläche in Kontakt stehen. Pflanzen, die die elektrisch-isolierte Fläche berühren, z.B. durch Herunterhängen, werden von der Potenzialdifferenz nicht beeinflusst.

### Ausführungsbeispiel 7:

Ein Gleichspannungsgenerator liefert permanent eine für Menschen und Tiere ungefährliche Kleinspannung von 60 Volt. Diese Spannung wird über eine Leitung an ein Material geführt, das als Netz, Vlies, Gitter, Matte oder Folie klassifiziert ist. Wesentliches und kennzeichnendes Merkmal dieses Materials ist, dass sich Ober- und Unterseite des Materials in Bezug auf die elektrische Leitfähigkeit unterscheiden: Eine Seite [Schicht] ist nach außen hin vollflächig und spannungsisolierend abgegrenzt, während die andere Seite [Schicht] elektrisch-leitfähig ist. Der Minuspol des Gleichspannungsgenerators ist über die Leitung mit dem Erdspieß verbunden. Erfindungsgemäß wird zwischen der elektrisch-leitfähigen Fläche des Materials und dem Erdreich über den Erdspieß eine Potenzialdifferenz aufgebaut.

Diese überträgt sich ausschließlich auf die Pflanzen, die mit der elektrisch-leitfähigen, nicht-isolierten Seite [Schicht] des Materials bereits in Kontakt stehen oder zukünftig kommen, zum Beispiel beim Hindurchwachsen. Der in den Pflanzen fließende Gleichstrom führt nach gewisser Zeit zum Absterben der Pflanzen.

Diese Anwendung ermöglicht den gezielten Einsatz auf Flächen, wo Wildkrautvernichtung zugunsten von angrenzenden Nutzpflanzen gewünscht ist, ohne dass das Wachstum der angrenzenden Nutzpflanzen beeinträchtigt wird, wie zum Beispiel auf Obst-, Kaffee-, Weinanbau- und anderen Gehölzplantagen sowie Erdbeer-, Spargel-, Kohl- und anderen monokulturellen Gemüsefeldern, aber auch in der sonstigen Landwirtschaft, im Zierpflanzenanbau, in Gewächshäusern und im Hobby-Garten.

### Ausführungsbeispiel 8:

Ein Gleichspannungsgenerator liefert permanent eine für Menschen und Tiere ungefährliche Kleinspannung von 60 Volt, die über eine Leitung an mit elektrisch-leitfähigem Gel, Spray oder Lack beschichtete Pflastersteine, Pflastersteinfugen oder andere, vorbehandelte Baustoffe geführt wird. Der Minuspol des Gleichspannungsgenerators ist über die Leitung mit dem Erdspieß verbunden. Erfindungsgemäß wird zwischen den mit elektrisch-leitfähigem Gel, Spray oder Lack beschichteten Pflastersteinen, Pflastersteinfugen oder anderen, vorbehandelten Baustoffen und dem Erdreich über den Erdspieß eine Potenzialdifferenz aufgebaut. Diese wirkt auf Pflanzen, die sich an den mit elektrisch-leitfähigem Gel, Spray oder Lack beschichteten Stellen der Pflastersteine, in den mit elektrisch-leitfähigem Gel, Spray oder Lack beschichteten Pflastersteinfugen oder auf anderen, vorbehandelten Baustoffen befinden. Der in den Pflanzen fließende Gleichstrom führt nach gewisser Zeit zum Absterben der Pflanzen.

## Patentansprüche

1. Vorrichtung zur Vernichtung unerwünschten Pflanzenwuchses wie Unkraut, umfassend mindestens eine Stromquelle, mindestens zwei Leiter, mit denen eine elektrische Gleichspannung an eine oder mehrere Pflanzen als Teil des unerwünschten Pflanzenwuchses angelegt wird.

2. Vorrichtung nach Anspruch 1, wobei zumindest ein Leiter zumindest eine Opferanode aufweist und die Opferanode ein in der Spannungsreihe unedleres Verlustmaterial aufweist als der andere Leiter, der an eine oder mehrere Pflanzen als Teil des unerwünschten Pflanzenwuchses angelegt ist, wobei der andere Leiter als Kathode fungiert und vorzugsweise Teil einer Weidezaunanlage ist.

3. Vorrichtung nach zumindest einem der vorhergehenden Ansprüche, wobei die Stromquelle mindestens 3 V Gleichspannung in die Leiter einbringt und vorzugsweise maximal 100 V Gleichspannung oder die Gleichspannung zumindest 9 V, vorzugsweise zumindest 24 V oder zumindest 36 V, und besonders bevorzugt zumindest 42 V oder sogar zumindest 60 V beträgt und auch unabhängig hiervon die Gleichspannung maximal 100 V, bevorzugt maximal 80 V, beträgt.

4. Vorrichtung nach zumindest einem der vorhergehenden Ansprüche, wobei die Stromquelle
a) einen permanenten Stromfluss von Gleichstrom bewirkt,
b) der Gleichstrom gepulst ist oder
c) die Polarität des Gleichstroms in Abhängigkeit von der Zeit wechselt, insbesondere in Abständen von größer 30 min, insbesondere größer 2 h.

5. Vorrichtung nach zumindest einem der vorhergehenden Ansprüche, wobei die Stromquelle eine Gleichstromspannungsquelle umfasst und zusätzlich ein Hochspannungsgenerator zur Erzeugung von Hochspannungsspitzen betrieben wird, wobei
a) Gleichstromgenerator und Hochspannungsgenerator entweder zeitlich versetzt Strom auf den Leiter aufbringen oder
b) die Hochspannungsspitzen zeitlich gepulst dem Gleichstrom überlagert werden.

6. Vorrichtung nach Anspruch 5, wobei der Hochspannungsgenerator Hochspannungsspitzen von größer 1000 V, insbesondere größer 5000 V, bereitstellt, insbesondere zeitlich beabstandet um mindestens 0,5 oder mindestens 1 s und auch unabhängig hiervon insbesondere für eine Pulsdauer von kleiner 10 ms.

7. Vorrichtung nach zumindest einem der vorhergehenden Ansprüche1 und 3 bis 6, wobei zumindest ein Leiter eine Kathode ist und zumindest ein Leiter eine Anode ist und die Anode im elektrischen Kontakt mit der Pflanze steht und die Kathode im elektrischen Kontakt mit dem Erdreich steht, wobei vorzugsweise mehrere Leiter die Kathode bilden und an verschiedenen Stellen mit dem Erdreich in Verbindung stehen.

8. Vorrichtung nach zumindest einem der vorhergehenden Ansprüche 1 bis 6, wobei zumindest ein Leiter eine Kathode ist und zumindest ein Leiter eine Anode ist und Anode und Kathode mit verschiedenen Stellen jeweils einer Pflanze in Kontakt stehen.

9. Vorrichtung nach zumindest einem der vorhergehenden Ansprüche, wobei zumindest ein Leiter oder ein Teil des Leiters ein metallischer Leiter, leitender Kohlenstoff oder ein elektrisch-leitender Kunststoff ist.

10. Vorrichtung nach zumindest einem der vorhergehenden Ansprüche, wobei zumindest ein Leiter ausgewählt ist aus einem oder mehreren Mitgliedern der Gruppe:
- Litzen oder Bänder,
- Netzen, Vliese, Folien, oder Matten,
- Drähten, Ketten, oder Seilen,
- flächige Drahtgeflechte, flächige Kettengeflechte,
- Gitter oder Platten,
- Erdspieße oder Stäbe,
- Walzen oder Kämme.

11. Vorrichtung nach zumindest einem der vorhergehenden Ansprüche, wobei der Leiter oder ein Teil des Leiters ein leitfähiges Gel, ein leitfähiger Schaum oder eine leitfähige Flüssigkeit ist.

12. Vorrichtung nach zumindest einem der vorhergehenden Ansprüche, wobei der Leiter neben Metall auch jeweils elektrisch leitende
- Pasten oder Gele,
- Imprägnierungen oder Beschichtungen aus flüssigem, ggf. härtendem, Material,
- Klebstoffe oder Sprays oder
- Schäume aufweist,
die jeweils mit dem Metall in elektrisch leitender Verbindung stehen.

13. Vorrichtung nach zumindest einem der vorhergehenden Ansprüche, wobei
- die Leiter ein Paar von Anode und Kathode bilden und
- Anode und Kathode jeweils als Flächengebilde ausgebildet sind und
- die Flächengebilde miteinander über eine Isolierung verbunden sind und
- die Flächengebilde und die Isolierung Durchbrechungen zum Durchwachsen von Pflanzen aufweisen.

14. Vorrichtung nach Anspruch 13, wobei die Leiter ein flächiges Netzwerk einerseits auf und andererseits unter einer durchbrochenen Folie oder Matte als Isolierung für die Leiter bilden.

15. Verwendung der Vorrichtung nach zumindest einem der vorhergehenden Ansprüche zur Vernichtung unerwünschten Pflanzenwuchses wie Unkraut.

16. Verfahren zur Vernichtung unerwünschten Pflanzenwuchses wie Unkraut unter Verwendung der Vorrichtung nach zumindest einem der vorhergehenden Ansprüche 1 bis 14, umfassend mindestens eine Stromquelle, mindestens zwei Leiter, wobei mit dem Leiter eine elektrische Gleichspannung an eine oder mehrere Pflanzen als Teil des unerwünschten Pflanzenwuchses angelegt wird, so dass ein Gleichstrom in den Leitern fließt, wobei die Stromquelle mindestens 3V und maximal 100 V Gleichspannung in die Leiter einbringt.
